# EUROPEAN PATENT SPECIFICATION

(11) **EP 2 048 971 B1**
(45) Date of publication and mention of the grant of the patent: **29.09.2010**
(21) Application number: 07805111.7
(22) Date of filing: 11.07.2007
(51) Int. Cl.: A23L 1/226

(54) **KETO-ESTERS AS FLAVORING INGREDIENTS**
KETOESTER ALS AROMASTOFFE
CÉTO-ESTERS EN TANT QU'INGRÉDIENTS AROMATIQUES

(30) Priority: 04.08.2006 EP 06118482
(43) Date of publication of application: 22.04.2009
(73) Proprietor: Firmenich SA, 1211 Genève 8 (CH)
(72) Inventor: NAEF, Regula, CH-6423 Seewen (CH); JAQUIER, Alain, CH-1291 Commugny (CH); MAURER, Bruno, CH-1245 Collonge-Bellerive (CH)
(74) Representative: Carina, Riccardo Filippo
(86) International application number: PCT/IB2007/052760
(87) International publication number: WO 2008/015597

(56) References cited:
- US-B1- 6 287 620
- SHIOTA, H.: "VOLATILE COMPONENTS OF PAWPAW FRUIT (ASIMINA TRILOBA DUNAI.)" JOURNAL OF AGRICULTURAL AND FOOD CHEMISTRY, no. 39, 1991, pages 1631-1635, XP002416321 cited in the application

## Description

### Technical field

The present invention relates to the field of flavors and in particular to the use as flavoring ingredients of particular α-ester-ketones as defined further below.

The present invention concerns the use of said compounds in the flavor industry as well as the compositions or articles containing said compounds.

### Prior art

1-Methyl-2-oxopropyl hexanoate is reported in the prior art (see H. Shiota in J.Agnic.Food.Chem, 1991, 39, 1631). This compound is described as being a volatile component of the ripe pawpaw fruit. The documents reports also a natural oil, still of ripe pawpaw, containing 1.1-1.2% w/w of the compound. Furthermore, the document describes the taste of the compound when incorporated in plain water at 40 ppm (indicated as being the suitable concentration for taste evaluation). However the prior art does not teach or even suggest the particular organoleptic properties of the invention's compounds when used at a lower concentration.

### Description of the invention

We have now surprisingly discovered that 1-methyl-2-oxopropyl hexanoate, of formula 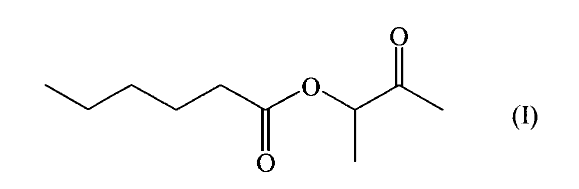 can be used as flavoring ingredient, in a particular range of concentration, for instance to impart or enhance taste notes of the green-tea, fermented tea, cereal, vegetable and/or green-fatty type.

In other words, the invention concerns a method to confer, enhance, improve or modify the flavor properties of a flavored article, which method comprises adding to said article from 0.10 to 20 ppm, relative to the weight of said article, a compound of formula (I). According to a particular embodiment of the invention, the method is particularly suitable to confer, enhance, improve or modify green-tea, fermented tea, cereal, vegetable and/or green-fatty type notes of said article.

Furthermore, still according to a further embodiment, the invention's compounds can be added in amounts accounting from 0.5 to 10 ppm, relative to the weight of said article.

Indeed, we have found that, contrary to the teaching of the prior art, the invention's compounds, when used at a dosage above described, are capable of imparting taste flavors notes as described above. The overall organoleptic effect imparted to the articles to which they are added is therefore different from the one described in the prior art when used at 40 ppm, indeed the fruit-estery (top-note) character is absent, or hardly noticeable.

The invention's compound can be used in the form of a pure stereoisomer or in the form of any mixtures of said stereoisomers.

Moreover, since the compound of formula (I) can be advantageously incorporated into flavored articles to positively impart, or modify, the taste of said articles, then a flavored article comprising:
i) as flavoring ingredient, from 0.1 to 20 ppm, relative to the total weight of said article, of at least one compound of formula (I), as defined above; and
ii) a foodstuff base selected form the group consisting of flavored tea bags, teas extracts based drinks, coffee extract based drinks, alcoholic beverages, confectionary and savory;
is also an object of the present invention.

For the sake of clarity, it has to be mentioned that, by "foodstuff base", we mean here a manufactured consumer product optionally comprising other flavors. Therefore, a flavored article according to the invention comprises the functional formulation, as well as optionally additional benefit agents, corresponding to a desired edible product, e.g. a tea, coffee or a snack, and a convenient amount of at least one invention's compound.

The nature and type of the constituents of the foodstuffs or beverages do not warrant a more detailed description here, which in any case would not be exhaustive, the skilled person being able to select them on the basis of its general knowledge and according to the nature of said product.

According to a particular embodiment of the invention, suitable foodstuff bases include tea or coffee based drinks, cereal based alcoholic drinks, chewing-gum, vegetable soups and snacks.

Furthermore, according to a further embodiment, the compounds of formula (I) can be present in the flavored article in amounts ranging from 0.5 to 15 ppm, relative to the total weight of said article.

Another object of the present invention is a compounded flavoring composition comprising:
i) as flavoring ingredient, the compound of formula (I);
ii) a flavor base; and
iii) optionally a flavor carrier and/or at least one flavor adjuvant.

By "compounded flavoring composition" we mean here a composition obtained by admixing various ingredients, to the contrary of an essential oil or a natural extract.

By "flavor carrier" we mean here a material which is practically neutral from a flavor point of view, i.e. that does not significantly alter the organoleptic properties of flavoring ingredients. Said carrier may be a liquid or a solid.

As liquid carrier one may cite, as non-limiting examples, an emulsifying system, i.e. a solvent and a surfactant system, or a solvent commonly used in flavors. A detailed description of the nature and type of solvents commonly used in flavor cannot be exhaustive. As non-limiting examples of solvents commonly used in flavors, one can cite compounds such as propylene glycol, triacetine, triethyl citrate, benzylic alcohol, ethanol, vegetal oils or terpenes.

As solid carrier one may cite, as non-limiting examples, absorbing gums or polymers, or yet encapsulating materials. Examples of such materials may comprise wall-forming and plasticizing materials, such as mono, di- or trisaccharides, natural or modified starches, hydrocolloids, cellulose derivatives, polyvinyl acetates, polyvinylalcohols, proteins or pectins, or yet the materials cited in reference texts such as H. Scherz, Hydrokolloids : Stabilisatoren, Dickungs- und Gehermittel in Lebensmittel, Band 2 der Schriftenreihe Lebensmittelchemie, Lebensmittelqualität, Behr's VerlagGmbH & Co., Hamburg, 1996. The encapsulation is a well known process to a person skilled in the art, and may be performed, for instance, by using techniques such as spray-drying, agglomeration or yet extrusion; or consists of a coating encapsulation, including coacervation and complex coacervation techniques.

Generally speaking, by "flavor base" we mean here a composition comprising at least one flavoring co-ingredient.

Said flavoring co-ingredient is not of the formula (I). Moreover, by "flavoring co-ingredient" it is meant here a compound, which is used in flavoring preparation or composition to impart a hedonic effect. In other words such a co-ingredient, to be considered as being a flavoring one, must be recognized by a person skilled in the art as being able to impart or modify in a positive or pleasant way the taste of a composition, and not just as having a taste.

The nature and type of the flavoring co-ingredients present in the base do not warrant a more detailed description here, which in any case would not be exhaustive, the skilled person being able to select them on the basis of its general knowledge and according to intended use or application and the desired organoleptic effect. In general terms, these flavoring co-ingredients belong to chemical classes as varied as alcohols, aldehydes, ketones, esters, ethers, acetates, nitriles, terpene hydrocarbons, nitrogenous or sulphurous heterocyclic compounds and essential oils, and said flavoring co-ingredients can be of natural or synthetic origin. Many of these co-ingredients are in any case listed in reference texts such as the book by S. Arctander, Perfume and Flavor Chemicals, 1969, Montclair, New Jersey, USA, or its more recent versions, or in other works of a similar nature, as well as in the abundant patent literature in the field of flavor. It is also understood that said co-ingredients may also be compounds known to release in a controlled manner various types of flavoring compounds.

Generally speaking, by "flavor adjuvant" we mean here an ingredient capable of imparting additional added benefit such as a color, a particular light resistance, chemical stability, etc. A detailed description of the nature and type of adjuvant commonly used in flavoring bases cannot be exhaustive, but it has to be mentioned that said ingredients are well known to a person skilled in the art.

An invention's composition comprising at least the compound of formula (I), a flavor base and a flavor carrier is a preferred embodiment of the invention.

### Examples

The invention will now be described in further detail by way of the following examples, wherein the abbreviations have the usual meaning in the art, the temperatures are indicated in degrees centigrade (°C); the NMR spectral data were recorded in CDCl₃ (if not stated otherwise) with a 360 or 400 MHz machine for ¹H and ¹³C, the chemical displacements δ are indicated in ppm with respect to TMS as standard, the coupling constants J are expressed in Hz.

### Example 1

### Synthesis of 1-methyl-2-oxopropyl hexanoate

Sodium hexanoate: NaOH (20 g, 0.5 mol) in H₂O (80 ml) was introduced into a flask cooled in an ice/water bath. Hexanoic acid (58.0.g, 0.5 mol) was added dropwise. Warmed up to room temperature (pH 8), the mixture was washed with ether to remove any free acid. The sticky salt was dried and reduced to a fine powder with a mortar.

The sodium salt thus obtained (13.8 g, 0.1 mol), hexanoic acid (23.2 g, 0.2 mol) and 3-chloro-2-butanone (10.65 g, 0.1 mol) were heated at 130°C for 7 hours. The reaction mixture was cooled to room temperature. Ether was added and the mixture was cooled with an ice bath. Saturated aqueous Na₂CO₃ was added and the mixture was stirred for 15 min. The 2 phases were separated, the aqueous phase was extracted with ether. The combined organic phases were washed with water and dried with MgSO₄ and concentrated. The residue (7.16 g) was distilled at 67-72°C at 12 mmHg using a Vigreux column to give the ester (9.59 g, 90% purity).
¹H-NMR: 0.91(t, *J*=6.5, 3H) ; 1.33(m, 4H) ; 1.40(d, J=6.5, 3H) ; 1.66(m, 2H) ; 2.17(s, 3H) ; 2.39(m, 2H), 5.08(q, 1H).
¹³C-NMR: 205.8(s); 173.2(s); 74.7(d); 34.0(t); 31.3(t); 25.7(q); 24.5(t); 22.3(t); 16.0(q); 13.9(q).

### Example 2

Two flavoring compositions, (A) and (B), for onion soup were prepared by admixing the following ingredients:

| | Composition (A) (comparative) | Composition (B) (as per invention) |
|---|---|---|
| Ingredient | Parts by weight | Parts by weight |
| 10%* Acetylpyrazine | 5 | 5 |
| Aldehyde C6 | 10 | 10 |
| 1%* Isovalerianic aldehyde | 40 | 40 |
| 10%* Decadienal | 15 | 15 |
| 10%* Disulfure | 40 | 40 |
| Furaneol | 25 | 25 |
| 1%* Isobutyldithiazine | 25 | 25 |
| 1-Methyl-2-oxopropyl hexanoate | --- | 30 |
| 10%* Dipropyl disulfide | 10 | 10 |
| Dimethyl sulfide | 5 | 5 |
| 10%* S-(2-Methyl-3-furyl)-ethanethioate | 10 | 10 |
| Triacetine | 815 | 785 |
| Total | 1000 | 1000 |

| | | |
|---|---|---|
| * in triacetine | | |

To a portion of a standard unflavored canned onion soup were added 100 ppm, relative to the weight of the soup, of the flavoring composition (A).

To the other portion of the above unflavored canned onion soup were added 100 ppm, relative to the weight of the soup, of the flavoring composition (B).

There were thus obtained two flavored canned onion soups, one containing compound (I) and the other not containing it.

The soup containing composition (A) had an aggressive sulfury, roasted onion and caramelized character.

By comparison, the soup containing composition (B) had a flavor with a more natural onion character, with fresh green notes and a noticeably enhanced vegetable character, and wherein the aggressive sulfur character of the base composition (A) was noticeably reduced.

No fruity (pawpaw or apple) notes were perceivable in the soup containing composition (B).

### Example 3

Two flavoring compositions, (A) and (B), for a coffee based drink were prepared by admixing the following ingredients :

| | Composition (A) (comparative) | Composition (B) (as per invention) |
|---|---|---|
| Ingredient | Parts by weight | Parts by weight |
| Acetylpyrazine | 10 | 10 |
| Butyric acid | 60 | 60 |
| 5-Decanolide | 20 | 20 |
| 2-Furanmethanethiol | 30 | 30 |
| 10%* Dimethylphenols | 20 | 20 |
| Furaneol | 50 | 50 |
| 10%* Guaiacol | 30 | 30 |
| 5-Methylquinoxaline | 40 | 40 |
| 1-Methyl-2-oxopropyl hexanoate | ---- | 25 |
| 2,6-Dimethoxyphenol | 30 | 30 |
| 2-Methoxy-4-vinylphenol | 5 | 5 |
| 2-Hydroxy-3-methyl-2-cyclopenten-1-one | 100 | 100 |
| 10%* Pyridine | 30 | 30 |
| 10%* S-(2-Methyl-3-furyl)-ethanethioate | 10 | 10 |
| Triacetine | 565 | 540 |
| Total | 1000 | 1000 |

| | | |
|---|---|---|
| * in triacetine | | |

To a portion of a standard unflavored coffee based drink were added 50 ppm, relative to the weight of the drink, of the flavoring composition (A).

To the other portion of the above unflavored coffee based drink were added 50 ppm, relative to the weight of the drink, of the flavoring composition (B).

There were thus obtained two flavored coffee based drinks, one containing compound (I) and the other not containing it.

The drink containing composition (A) had a classic coffee flavor with a roasted and dark heavy note.

The drink containing composition (B) had a coffee flavor with a "freshly brewed" note, as well as a light green, bean note and a velvety effect.

No fruity (pawpaw or apple) notes were perceivable in the drink containing composition (B).

### Example 4

Two flavoring compositions, (A) and (B), for cereal bars was prepared by admixing the following ingredients :

| | Composition (A) (comparative) | Composition (B) (as per invention) |
|---|---|---|
| Ingredient | Parts by weight | Parts by weight |
| Amylic alcohol | 50 | 50 |
| 10%* Isovalerianic aldehyde | 25 | 25 |
| Propylene glycol | 790 | 765 |
| 15%** Furaneol | 35 | 35 |
| 10%* 3-Methyl-1-butanol | 25 | 25 |
| 0.1%** 2-Methoxy-4-vinylphenol | 25 | 25 |
| 2,3,5-Trimethylpyrazine | 10 | 10 |
| 1-Methyl-2-oxopropyl hexanoate | --- | 25 |
| 10%** Thiazoline | 25 | 25 |
| Vanilline | 25 | 25 |
| Total | 1000 | 1000 |

| | | |
|---|---|---|
| * in triacetine ** in propylene glycol | | |

To a portion of a standard unflavored cereal bar were added 200 ppm, relative to the weight of the bar, of the flavoring composition (A).

To the other portion of the above unflavored cereal bars were added 200 ppm, relative to the weight of the bar, of the flavoring composition (B).

There were thus obtained two flavored cereal bars, one containing compound (I) and the other not containing it.

The bar containing composition (A) had a malty, sweet, caramelic, fermented character. By comparison, the bar containing composition (B) had a flavor with an enhanced sweet cereal character and the whole flavor was more natural.

No fruity (pawpaw or apple) notes were perceivable in the bar containing composition (B).

### Example 5

Two flavoring compositions, (A) and (B), for a green tea bag were prepared by admixing the following ingredients :

| | Composition (A) (comparative) | Composition (B) (as per invention) |
|---|---|---|
| Ingredient | Parts by weight | Parts by weight |
| Isovalerianic acid | 10 | 10 |
| Ethanol | 785 | 745 |
| Butyric aldehyde | 5 | 5 |
| Aldehyde C6 | 10 | 10 |
| 10%** Phenylacetic aldehyde | 10 | 10 |
| 10%** (2E,6Z)-2,6-nonadien-1-ol | 5 | 5 |
| (Z)-3-Hexenyl butyrate | 10 | 10 |
| Damascenone | 5 | 5 |
| 10%** Indol | 25 | 25 |
| Linalool | 40 | 40 |
| 1-Methyl-2-oxopropyl hexanoate | --- | 40 |
| 1%** 3-(Methylthio)propanal | 20 | 20 |
| 10%* Pyridine | 40 | 40 |
| Terpineol | 30 | 30 |
| 10%** 2,2,6-Trimethyl-1-cyclohexanone | 5 | 5 |
| Total | 1000 | 1000 |

| | | |
|---|---|---|
| * in triacetine ** in ethanol | | |

To a portion of a standard unflavored green tea bag were added 50 ppm, relative to the weight of the bag, of the flavoring composition (A).

To the other portion of the above unflavored green tea bag were added 50 ppm, relative to the weight of the bag, of the flavoring composition (B).

There were thus obtained two flavored green tea bags, one containing compound (I) and the other not containing it.

The tea bag containing composition (A) had a green tea, leafy, floral, sweet, slightly oily character.

By comparison, the tea bag containing composition (B) had a genuine green, slightly fermented character of freshly brewed green tea as well as the fatty top notes of freshly brewed green tea.

No fruity (pawpaw or apple) notes were perceivable in the tea containing composition (B).

## Claims

1. A method to confer, enhance, improve or modify the flavor properties of a flavored article, which method comprises adding to said article from 0.10 to 20 ppm, relative to the weight of said article, a compound of formula 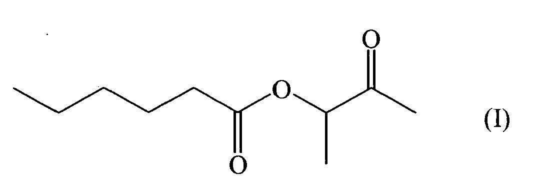 in the form of a pure stereoisomer or in the form of any mixtures of said stereoisomers.

2. Method according to claim 1, **characterized in that** said compound (I) is added as flavoring ingredient to impart or enhance taste notes of the green-tea, fermented tea, cereal, vegetable and/or green-fatty type.

3. Method according to claim 1, **characterized in that** said compound (I) is added in amount accounting from 0.5 to 10 ppm, relative to the weight of said article.

4. A flavored article comprising:
i) as flavoring ingredient, from 0.1 to 20 ppm, relative to the total weight of said article, of at least one compound of formula (I), as defined in claim 1; and
ii) a foodstuff base selected form the group consisting of flavored tea bags, teas extracts based drinks, coffee extract based drinks, alcoholic beverages, confectionary and savory.

5. A flavored article according to claim 4, **characterized in that** the compounds of formula (I) is present in the flavored article in amounts ranging from 0.5 to 15 ppm, relative to the total weight of said article.

6. A flavored article according to claim 4, **characterized in that** the said foodstuffs base is a tea or coffee based drink, a cereal based alcoholic drink, a chewing-gum, a soup or a snack.

7. A compounded flavoring composition comprising:
i) as flavoring ingredient, the compound of formula (I), as defined in claim 1;
ii) a flavor base; and
iii) optionally a flavor carrier and/or at least one flavor adjuvant.

## Patentansprüche

1. Verfahren zum Übertragen, Verstärken, Verbessern oder Modifizieren der Aromaeigenschaften eines aromatisierten Gegenstands, welches Verfahren umfaßt, zu dem Gegenstand von 0,10 bis 20 ppm, relativ zu dem Gewicht des Gegenstands, einer Verbindung der Formel 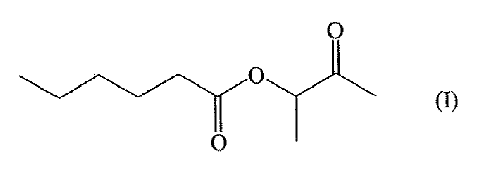 in der Form eines reinen Stereoisomers oder in der Form von beliebigen Gemischen der Stereoisomere hinzuzufügen.

2. Verfahren gemäß Anspruch 1, **dadurch gekennzeichnet, daß** die Verbindung (I) als aromatisierender Bestandteil hinzugefügt wird, um Geschmacksnoten des grünen Tees, von fermentiertem Tee, Getreide, Gemüse und/oder grünfettigem Typ zu verleihen oder zu verstärken.

3. Verfahren gemäß Anspruch 1, **dadurch gekennzeichnet, daß** die Verbindung (I) in einer Menge hinzugefügt wird, die von 0,5 bis 10 ppm, relativ zu dem Gewicht des Gegenstands, ausmacht.

4. Aromatisierter Gegenstand, umfassend:
i) als aromatisierenden Bestandteil von 0,1 bis 20 ppm, relativ zu dem Gesamtgewicht des Gegenstands, von mindestens einer Verbindung der Formel (I), wie definiert in Anspruch 1; und
ii) eine Nahrungsmittelbasis, ausgewählt aus der Gruppe, bestehend aus aromatisierten Teebeuteln, auf Teeextrakten basierenden Getränken, auf Kaffeeextrakt basierenden Getränken, alkoholischen Getränken, Süßwaren und salzig-pikanten Vor- und Nachspeisen.

5. Aromatisierter Gegenstand gemäß Anspruch 4, **dadurch gekennzeichnet, daß** die Verbindungen der Formel (I) in dem aromatisierten Gegenstand in Mengen vorhanden ist, die von 0,5 bis 15 ppm, relativ zu dem Gesamtgewicht des Gegenstands, reichen.

6. Aromatisierter Gegenstand gemäß Anspruch 4, **dadurch gekennzeichnet, daß** die Nahrungsmittelbasis ein auf Tee oder Kaffee basierendes Getränk, ein auf Getreide basierendes alkoholisches Getränk, ein Kaugummi, eine Suppe oder ein Snack ist.

7. Gemischte aromatisierende Zusammensetzung, umfassend:
i) als aromatisierenden Bestandteil die Verbindung der Formel (I), wie definiert in Anspruch 1;
ii) eine Aromabasis; und
iii) gegebenenfalls einen Aromaträger und/oder mindestens einen Aromahilfsstoff.

## Revendications

1. Procédé pour conférer, intensifier, améliorer ou modifier les propriétés aromatisantes d'un article aromatisé, lequel procédé consiste à ajouter audit article de 0,10 à 20 ppm, par rapport au poids dudit article, d'un composé de formule 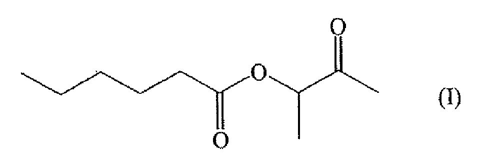 sous forme de stéréoisomère pur ou sous forme de mélanges quelconques desdits stéréoisomères.

2. Procédé selon la revendication 1, **caractérisé en ce que** ledit composé (I) est ajouté en tant qu'ingrédient aromatisant pour conférer ou intensifier des notes de goût du type thé vert, thé fermenté, céréale, légume et/ou gras vert.

3. Procédé selon la revendication 1, **caractérisé en ce que** ledit composé (I) est ajouté en une quantité de 0,5 à 10 ppm, par rapport au poids dudit article.

4. Article aromatisé comprenant:
i) en tant qu'ingrédient aromatisant, de 0,1 à 20 ppm, par rapport au poids total dudit article, d'au moins un composé de formule (I), tel que défini dans la revendication 1; et
ii) une base de produit alimentaire choisie dans le groupe constitué des sachets de thé aromatisé, des boissons à base d'extraits de thé, des boissons à base d'extraits de café, des boissons alcoolisées, des confiseries et des produits salés.

5. Article aromatisé selon la revendication 4, **caractérisé en ce que** les composés de formule (I) sont présents dans l'article aromatisé en quantités allant de 0,5 à 15 ppm, par rapport au poids total dudit article.

6. Article aromatisé selon la revendication 4, **caractérisé en ce que** ladite base de produit alimentaire est une boisson à base de thé ou de café, une boisson alcoolisée à base de céréale, une gomme à mâcher, une soupe ou un amuse-gueule.

7. Composition aromatisante combinée comprenant:
i) en tant qu'ingrédient aromatisant, le composé de formule (I), tel que défini dans la revendication 1;
ii) une base d'arôme; et
iii) éventuellement, un support d'arôme et/ou au moins un adjuvant d'arôme.
